# EUROPEAN PATENT SPECIFICATION

(11) **EP 3 594 470 B1**
(45) Date of publication and mention of the grant of the patent: **03.05.2023**
(21) Application number: 17899643.5
(22) Date of filing: 06.03.2017
(51) Int. Cl.: F02B 25/04, F01L 3/06, F01L 3/16, F02B 25/20, F02D 13/02, F02B 75/02

(54) **UNIFLOW SCAVENGING TYPE TWO-CYCLE ENGINE**
ZWEITAKTMOTOR MIT UNIDIREKTIONALER SPÜLUNG
MOTEUR À DEUX TEMPS DU TYPE À BALAYAGE EN ÉQUICOURANT

(43) Date of publication of application: 15.01.2020
(73) Proprietor: IHI Corporation, Tokyo 135-8710 (JP)
(72) Inventor: YAMADA, Takayuki, Tokyo 135-8710 (JP); YAMADA, Takeshi, Tokyo 135-8710 (JP); UMEMOTO, Yoshiyuki, Aioi-shi Hyogo 678-0041 (JP)
(74) Representative: TBK
(86) International application number: PCT/JP2017/008778
(87) International publication number: WO 2018/163245

(56) References cited:
- WO-A1-2009/122221
- JP-A- S57 153 914
- JP-A- S57 153 914
- JP-U- H01 102 410
- JP-U- H01 102 410
- JP-U- S63 118 333
- JP-U- S63 118 333
- US-A- 1 873 119

## Description

### Technical Field

The present disclosure relates to a uniflow scavenging type two-cycle engine in which an exhaust valve opens and closes an exhaust port.

### Background

In a uniflow scavenging type two-cycle engine which is also used as an engine of a ship, a scavenging port is provided on one end side of a cylinder in a stroke direction of a piston, and an exhaust port is provided on a cylinder cover disposed on the other end side thereof. When active gas is sucked into a combustion chamber from the scavenging port, exhaust gas after the fuel combustion is pushed out of the exhaust port by the active gas and is discharged.

JP H09- 158738 A describes a configuration in which an auxiliary scavenging hole is provided in a portion of the cylinder close to the bottom dead center of the piston other than a main scavenging hole (the scavenging port), and when the piston descends to the vicinity of the bottom dead center, compressed air is injected into the cylinder from the auxiliary scavenging hole. Accordingly, the exhaust gas (residual gas) stagnating at a central portion of the cylinder is dispersed.

WO 2009/122221 A1 discloses a method and arrangements for the performing of a local cooling of the surroundings of an exhaust valve and its corresponding valve seat in a reciprocating internal combustion engine and, preferably, in low-speed or medium speed diesel engine. The method consists of the injection of a suitable cooling medium, via at least one outflow nozzle, inside the combustion chamber of the engine and, more specifically, into the space in front of the valve seat of the exhaust valve. Said injection is performed at a strictly predefined moment, just before the beginning of the opening of the exhaust valve. Via this way a cloud of vapors is formed -inside the combustion chamber- in the vicinity of the exhaust valve seat. This cloud of inert vapors is the first gaseous content of the combustion chamber which will escape from the combustion chamber through the very narrow opening which is formed, between exhaust valve and seat, at the very first moments of the opening movement of the exhaust valve. The outflow nozzles can be located either onto the exhaust valve or onto the valve seat or onto the cylinder head.

JP S63 118333 U discloses a uniflow scavenging type two-cycle engine having a cylinder with an exhaust port.

US 1 873 119 A discloses a combination of a valve and a seat for said valve, said valve having a contact surface beveled inwardly in the direction of flow through the valve port, and means for introducing a fluid envelope to the fluid passing through the valve port and at a point adjacent the front edge of the contact surface of the valve.

JP S57 153914 A discloses a cooler for a valve of an internal combustion engine in which a valve spindle is fitted in a valve casing mounted on a cylinder cover. The valve spindle is moved up and down by a lift together with a member and a spring bearer along the upper guide part 6 of the valve casing. A cooling air chamber is provided in the upper part of the valve casing. A cooling air passage is provided in the central part of the valve spindle. A cooling air chamber, which communicates with the passage, is provided in the central part of a valve cone. External air is introduced into the cooling air chamber through a check valve by the vertical motion of the valve spindle or cooling air from a feeder is introduced into the chamber through a check valve. During the descent of the valve spindle, the introduced air is compressed by the spring bearer functioning also as a piston and is conducted into the cooling air chamber 1through a passage inlet port and the passage to cool the valve spindle.

JP H01 102410 U discloses a uniflow scavenging type two-cycle engine having a cylinder with an exhaust port.

### Summary

### Technical Problem

The exhaust port is provided with an exhaust valve, and the exhaust port is opened and closed by the exhaust valve. Although a valve body of the exhaust valve is separated from the exhaust port at the time of valve opening, in some cases, the valve body may hinder the flow of exhaust gas discharged from the exhaust port. Therefore, there is a possibility that the exhaust gas stagnates in the vicinity of a facing surface of the exhaust valve facing the piston.

An object of the present disclosure is to provide a uniflow scavenging type two-cycle engine capable of efficiently discharging the exhaust gas from the cylinder in view of such problems.

### Solution to Problem

This object is achieved by a uniflow scavenging type two-cycle engine having the features of claim 1. An advantageous further development is defined in the dependent claim.

### Effects

According to the present disclosure, exhaust gas can be efficiently discharged from the cylinder.

### Brief Description of Drawings

FIG. 1 is an explanatory view showing an entire configuration of a uniflow scavenging type two-cycle engine.
FIG. 2 is an extraction enlarged view of a portion surrounded by an alternate long and short dash line of FIG. 1, showing a state in which an exhaust valve is closed.
FIG. 3 is an extraction enlarged view of the portion surrounded by the alternate long and short dash line of FIG. 1, showing a state in which the exhaust valve is opened.
FIG. 4 is an explanatory view showing an internal structure of the exhaust valve.
FIG. 5 is a first view showing an injector.
FIG. 6 is a second view showing the injector.

### Description of Embodiments

Hereinafter, preferred embodiments of the present disclosure will be described in detail with reference to the attached drawings. Dimensions, materials, specific numerical values and the like of constituent elements shown in the present embodiment are merely examples for facilitating understanding of the invention, and do not limit the present disclosure unless otherwise specified. Further, in the specification and the drawings, by denoting elements having substantially the same functions and configurations by the same reference signs, repeated descriptions will be omitted, and elements not directly related to the present disclosure will not be shown.

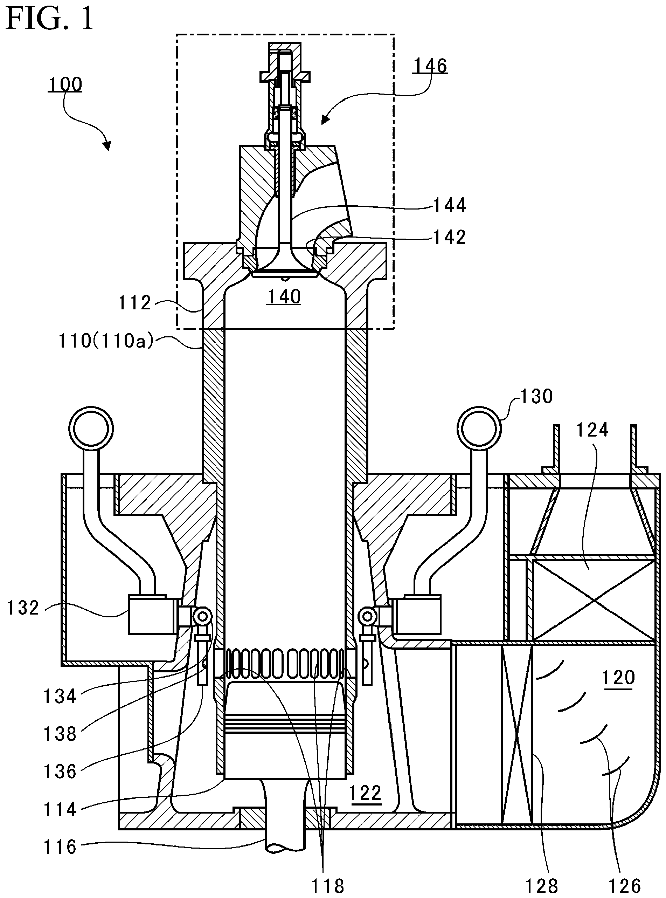

FIG. 1 is an explanatory view showing an entire configuration of a uniflow scavenging type two-cycle engine 100. The uniflow scavenging type two-cycle engine 100 of the present embodiment is used, for example, for a ship or the like. Specifically, the uniflow scavenging type two-cycle engine 100 is configured to include a cylinder 110, a cylinder cover 112, a piston 114, a piston rod 116, a scavenging port 118, a scavenging reservoir 120, a scavenging chamber 122, a cooler 124, a flow-adjusting plate 126, a drain separator 128, a fuel gas main pipe 130, a fuel injection device 132, an annular pipe 134, a fuel pipe 136, a fuel injection hole 138, a combustion chamber 140, an exhaust port 142, an exhaust valve 144, and an exhaust valve drive device 146. Hereinafter, in a central axis direction of the cylinder 110 (an up-down direction in the drawing of FIG. 1), the cylinder cover 112-side may be referred to as an upper side, and the scavenging chamber 122-side may be referred to as a lower side.

In the uniflow scavenging type two-cycle engine 100, the piston 114 slides in the cylinder 110 (a cylinder liner 110a), and exhaust, intake, compression, combustion, and expansion are performed during two strokes of an up-stroke and a down-stroke of the piston 114. One end of the piston rod 116 is fixed to the piston 114. Further, a cross head (not shown) is connected to the other end of the piston rod 116, and the cross head reciprocates together with the piston 114. When the cross head reciprocates together with the reciprocation of the piston 114, a crankshaft (not shown) rotates in conjunction with the reciprocation. Hereinafter, a direction in which the piston 114 reciprocates in the central axis direction of the cylinder 110 may be referred to as a stroke direction of the piston 114.

The scavenging port 118 is a hole penetrating from an inner peripheral surface to an outer peripheral surface of the cylinder 110, and a plurality of scavenging ports 118 are provided at intervals on the entire circumference of the cylinder 110. Further, the scavenging ports 118 suck active gas into the cylinder 110 in accordance with the sliding movement of the piston 114 in the stroke direction. The active gas contains oxygen, an oxidant such as ozone, or a mixture thereof (air, according to the invention). Although the scavenging port 118 of the present embodiment is formed in an oval shape extending in the stroke direction when viewed in the radial direction of the cylinder 110, the scavenging port 118 is not limited to this shape and may have, for example, a circular shape, an elliptical shape, a rectangular shape, a polygonal shape or the like.

Active gas (air, according to the invention) compressed by a supercharger, a blower or the like (not shown) is cooled by the cooler 124 and is sealed in the scavenging reservoir 120. The active gas flows in the scavenging reservoir 120 from the cooler 124 to the scavenging chamber 122. The compressed and cooled active gas is flow direction-adjusted by the flow-adjusting plates 126 disposed in the scavenging reservoir 120, and then water therein is removed by the drain separator 128.

The scavenging chamber 122 communicates with the scavenging reservoir 120 and surrounds one end side (a lower side in FIG. 1) of the cylinder 110 in the stroke direction of the piston 114 (hereinafter, simply referred to as the stroke direction). The active gas subjected to compression, cooling, and removal of water is guided to the scavenging chamber 122 from the scavenging reservoir 120.

The scavenging ports 118 open in the scavenging chamber 122. When the piston 114 descends below the scavenging ports 118, the inside of the cylinder 110 and the scavenging chamber 122 communicate with each other through the scavenging ports 118, and the scavenging ports 118 suck the active gas into the cylinder 110 from the scavenging chamber 122 due to a pressure difference between the scavenging chamber 122 and the inside of the cylinder 110.

The fuel gas main pipe 130 communicates with a fuel tank (not shown) and communicates with the annular pipe 134 via the fuel injection device 132. Fuel gas is guided from the fuel tank to the fuel gas main pipe 130, and when the fuel injection device 132 is driven, the fuel gas in the fuel gas main pipe 130 flows into the annular pipe 134.

Here, the fuel gas is, for example, a gas generated by gasifying LNG (Liquefied Natural Gas). Further, the fuel gas is not limited to LNG, and, for example, it is possible to use a gas obtained by gasifying LPG (Liquefied Petroleum Gas), light oil, heavy oil or the like therefor.

The annular pipe 134 is disposed on a radially outer side of the cylinder 110 and above the scavenging ports 118 in FIG. 1, and extends annularly in the circumferential direction of the cylinder 110 to surround the cylinder 110. A plurality of fuel pipes 136 are fixed to the scavenging port 118-side (that is, the lower side in FIG. 1) of the annular pipe 134 in the stroke direction. One fuel pipe 136 is disposed for each scavenging port 118, and the fuel pipes 136 extend in the stroke direction. Hereinafter, the radial direction of the cylinder 110 may be referred to simply as the radial direction, and the circumferential direction of the cylinder 110 may be referred to simply as the circumferential direction.

The fuel pipe 136 faces a wall surface of the cylinder 110 between scavenging ports 118 adjacent to each other in the circumferential direction, and the fuel injection hole 138 is formed on a portion of the fuel pipe 136 facing the wall surface. Here, since a plurality of scavenging ports 118 are provided on the entire circumference of the cylinder 110, a plurality of fuel pipes 136 (the fuel injection holes 138) are also provided in the circumferential direction of the cylinder 110 in accordance with the scavenging ports 118.

The fuel injection holes 138 inject the fuel gas flowed into the annular pipe 134 into the active gas that is to be sucked into the scavenging ports 118. As a result, the fuel gas joins the flow of the active gas and is sucked into the cylinder 110 from the scavenging ports 118 together with the active gas.

When the piston 114 is on the top dead center-side, the combustion chamber 140 is surrounded by the cylinder cover 112 (a cylinder head) disposed to cover an upper end opening portion of the cylinder 110, the cylinder liner 110a, and the piston 114, and thus is formed inside the cylinder 110. The active gas and the fuel gas sucked into the cylinder 110 are guided to the combustion chamber 140 by the piston 114.

An appropriate amount of fuel oil is injected into the combustion chamber 140 from a pilot injection valve (not shown) provided in the cylinder cover 112 at a desired time point in the engine cycle. The fuel oil is vaporized by heat of the combustion chamber 140. Further, the fuel oil is vaporized and spontaneously ignited to burn in a short time, the temperature of the combustion chamber 140 becomes extremely high, and the fuel gas guided to the combustion chamber 140 and compressed is burned. The piston 114 reciprocates by the expansion pressure due to the combustion mainly of the fuel gas.

The exhaust port 142 is formed on the upper side of the combustion chamber 140 in FIG. 1, and is opened and closed to discharge the exhaust gas generated by combustion of the fuel gas in the cylinder 110 outside of the cylinder 110. The exhaust port 142 of the present embodiment is formed in the cylinder cover 112 and an exhaust valve cage 156 to be described later. The exhaust valve 144 is slid up and down at a predetermined timing by the exhaust valve drive device 146 to open and close the exhaust port 142. After the combustion of the fuel gas, when the exhaust valve 144 is opened, the exhaust gas in the cylinder 110 is pushed out of the exhaust port 142 by the active gas (scavenging air) flowed in from the scavenging ports 118.

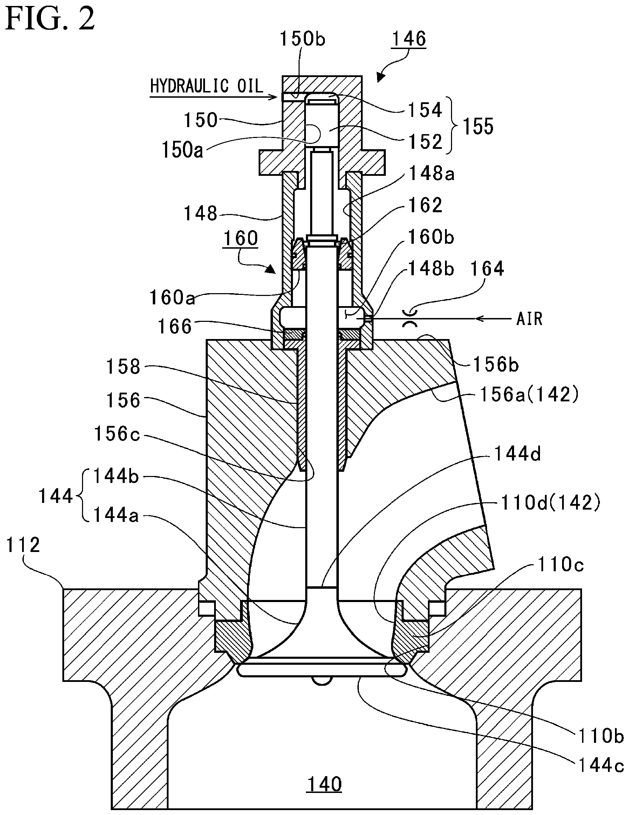

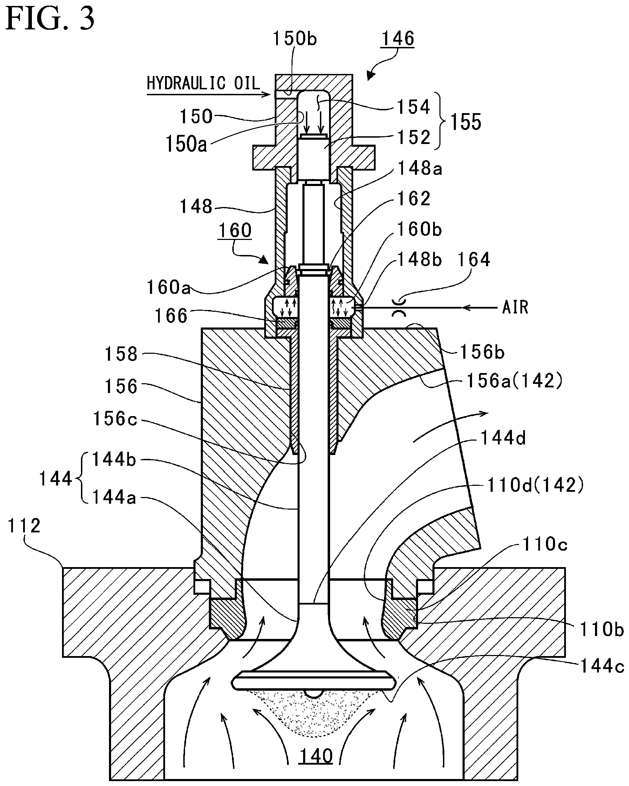

FIGS. 2 and 3 are extraction enlarged views of a portion surrounded by an alternate long and short dash line of FIG. 1. FIG. 2 shows a state in which the exhaust valve 144 is closed, and FIG. 3 shows a state in which the exhaust valve 144 is opened. As shown in FIGS. 2 and 3, a through-hole 110b is provided in the cylinder cover 112 to penetrate the cylinder cover 112 in the stroke direction above the combustion chamber 140, and an exhaust valve seat 110c is attached to the inside of the through-hole 110b. The exhaust valve seat 110c is an annular member including a valve seat hole 110d penetrating in the same direction as the through-hole 110b.

The exhaust valve 144 includes a valve body 144a and a shaft 144b. The valve body 144a is disposed inside the combustion chamber 140. A facing surface 144c (flame contact surface) facing the piston 114 in the stroke direction (an up-down direction in the drawing) is formed in the valve body 144a. The facing surface 144c extends in a surface direction substantially perpendicular to the stroke direction. The valve body 144a is seated on the exhaust valve seat 110c to openably close the valve seat hole 110d. The exhaust valve cage 156 is provided on a side of the cylinder cover 112 far from the combustion chamber 140.

The shaft 144b is fixed to a back surface portion 144d of the valve body 144a on a far side thereof from the facing surface 144c. The shaft 144b extends in the stroke direction and is provided to penetrate the exhaust valve cage 156. A tip portion (a lower tip portion) of the exhaust valve cage 156 is inserted into and fixed to a portion of the through-hole 110b of the cylinder cover 112 above the exhaust valve seat 110c. An exhaust hole 156a which communicates with the valve seat hole 110d and is curved and extends toward the upper right in the drawing is formed inside the exhaust valve cage 156. The exhaust hole 156a opens substantially toward a right area from a right lateral surface of the exhaust valve cage 156 in the drawing.

In the valve seat hole 110d of the exhaust valve seat 110c and the exhaust hole 156a of the exhaust valve cage 156, connection portions of both inner circumferential surfaces thereof are substantially flush. The exhaust port 142 is formed of the valve seat hole 110d of the exhaust valve seat 110c and the exhaust hole 156a of the exhaust valve cage 156. The valve body 144a openably closes the exhaust port 142.

The exhaust valve cage 156 is provided with a shaft hole 156c penetrating from an upper end 156b of the exhaust valve cage 156 to the exhaust port 142 in the stroke direction. An annular (substantially cylindrical) guide bush 158 is inserted through the shaft hole 156c, and the shaft 144b is inserted through the guide bush 158.

Thus, the shaft 144b is inserted into the shaft hole 156c via the guide bush 158 and is slidable with respect to the guide bush 158 in the stroke direction. That is, the shaft 144b is movable relative to the exhaust valve cage 156 in the stroke direction. Further, a tip (upper end portion) of the shaft 144b protrudes upward from the exhaust valve cage 156.

The exhaust valve drive device 146 moves the valve body 144a fixed to the shaft 144b upward and downward in the drawing by driving a portion of the shaft 144b that protrudes upward from the exhaust valve cage 156 to open and close the exhaust port 142.

Specifically, the exhaust valve drive device 146 includes a lower casing 148. The lower casing 148 is a substantially cylindrical member having a casing hole 148a penetrating therethrough in the stroke direction, and a lower end of the lower casing 148 is fixed to the exhaust valve cage 156, and an upper cover 150 is attached to an upper end of the lower casing 148.

A cover hole 150a that opens toward the lower casing 148 and communicates with the casing hole 148a is formed in the upper cover 150. The cover hole 150a extends in the stroke direction. The cover hole 150a is closed by a wall portion (an upper wall portion) of the upper cover 150 on a far side thereof from the lower casing 148, and a bottom of the cover hole 150a is formed on a side (the upper end portion) of the upper cover 150 far from the lower casing 148 and accordingly faces downward. That is, the upper cover 150 is formed in a substantially cylindrical shape with a top. An oil hole 150b penetrating from the outer peripheral surface of the upper cover 150 to the cover hole 150a is formed in the vicinity of the bottom of the cover hole 150a of the upper cover 150.

Further, a hydraulic drive piston 152 is fixed to a tip (the upper end) of the shaft 144b. The hydraulic drive piston 152 is inserted into the cover hole 150a to be slidable in the stroke direction, and thus a hydraulic chamber 154 is formed between the hydraulic drive piston 152 and the bottom of the cover hole 150a. The oil hole 150b opens to the hydraulic chamber 154, and the hydraulic oil supplied from an oil pump (not shown) is guided from the oil hole 150b to the hydraulic chamber 154.

When the hydraulic oil is guided to the hydraulic chamber 154 and a load due to the hydraulic pressure is applied to the hydraulic drive piston 152, that is, when the hydraulic drive piston 152 is pushed by the hydraulic pressure, the valve body 144a connected to the hydraulic drive piston 152 via the shaft 144b moves downward in FIG. 2, and the exhaust port 142 opens as shown in FIG. 3. In this way, the hydraulic drive piston 152 and the hydraulic chamber 154 function as a drive unit 155 that applies a load to the shaft 144b and moves the valve body 144a to an open position at which the valve body 144a opens the exhaust port 142. That is, the drive unit 155 includes the hydraulic drive piston 152 and the hydraulic chamber 154.

Further, when the hydraulic pressure of the hydraulic oil guided to the hydraulic chamber 154 decreases, the valve body 144a is returned to a closed position for closing the exhaust port 142 by a gas spring mechanism 160 formed in the casing hole 148a of the lower casing 148.

The gas spring mechanism 160 will be specifically described. The gas spring mechanism 160 includes an annular gas spring receiver 160a. The gas spring receiver 160a is fixed to the shaft 144b by a cotter 162 and is inserted into the casing hole 148a of the lower casing 148 to be slidable in the stroke direction to divide the inside of the casing hole 148a into two spaces in the stroke direction. That is, the gas spring receiver 160a is movable in conjunction with the movement of the shaft 144b in the stroke direction.

A gas chamber 160b is a space on the valve body 144a-side of the two spaces obtained by dividing the inside of the casing hole 148a with the gas spring receiver 160a, and part of the shaft 144b (an intermediate portion thereof in the stroke direction) is positioned inside the gas chamber 160b.

A gas hole 148b penetrating from the outer peripheral surface of the lower casing 148 to the casing hole 148a is formed in the lower casing 148. The gas hole 148b opens to the gas chamber 160b, and after the air (incombustible gas, incombustible fluid) compressed by a compressor (not shown) passes through an orifice 164, the air is guided from the gas hole 148b to the gas chamber 160b and stored therein.

Further, in the drawing, a seal ring is provided on the gas spring receiver 160a positioned above the gas chamber 160b, a seal plate 166 is provided on the lower side (the exhaust valve cage 156-side) of the gas chamber 160b, and accordingly air leakage from the gas chamber 160b to the outside is limited.

When the valve body 144a is moved to the open position by the drive unit 155, as shown in FIG. 3, the gas spring receiver 160a approaches the seal plate 166, the volume of the gas chamber 160b decreases, and the air stored in the gas chamber 160b is compressed. Therefore, when the load on the valve body 144a (the shaft 144b) by the drive unit 155 is released, the compressed air expands, the gas spring receiver 160a is pushed upward in the drawing, and thus as shown in FIG. 2, the gas spring mechanism 160 returns the valve body 144a connected to the gas spring receiver 160a via the shaft 144b to the closed position. At this time, the compressed air is supplied from the gas hole 148b to the gas chamber 160b to compensate for a decrease in the amount of air in the gas chamber 160b.

As shown in FIG. 3, when the exhaust valve 144 is opened, in some cases, the valve body 144a of the exhaust valve 144 is positioned in front of the combustion chamber 140-side of the exhaust port 142, and may impede the flow of exhaust gas discharged from the exhaust port 142. Although the exhaust gas flows around the valve body 144a so as to avoid the valve body 144a and is guided to the exhaust port 142, in the present embodiment, a mechanism for limiting the exhaust gas from stagnating in the vicinity of the facing surface 144c facing the piston 114 and for smoothly directing the exhaust gas to the exhaust port 142 is provided.

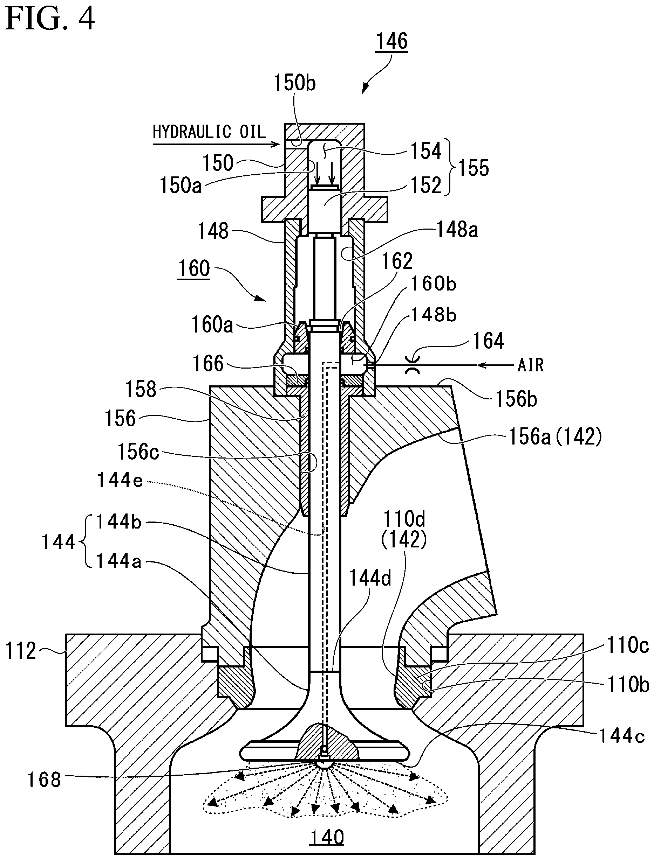

FIG. 4 is an explanatory view showing an internal structure of the exhaust valve 144. The valve body 144a shown in FIG. 4 is at the open position for opening the exhaust port 142. As shown in FIG. 4, the exhaust valve 144 is provided with a communication passage 144e (a communication hole). One end of the communication passage 144e opens at the facing surface 144c of the valve body 144a, and the other end thereof opens at a portion of the outer peripheral surface of the shaft 144b facing the gas chamber 160b at the time the valve body 144a is at the open position. The communication passage 144e is continuously formed from the inside of the valve body 144a to the inside of the shaft 144b.

Moreover, an injector 168 is attached to a portion of the facing surface 144c of the valve body 144a at which the communication passage 144e opens. The injector 168 injects the air guided from the gas chamber 160b through the communication passage 144e into the combustion chamber 140 as shown by the arrows with broken lines in FIG. 4, and disperses the exhaust gas stagnating in the vicinity of the facing surface 144c. That is, the communication passage 144e allows the gas chamber 160b and the injector 168 to communicate with each other. Further, the temperature of the air (incombustible gas, incombustible fluid) injected from the injector 168 into the combustion chamber 140 is lower than the temperature of the exhaust gas in the combustion chamber 140. Further, the uniflow scavenging type two-cycle engine 100 of the present embodiment further includes the valve body 144a, the shaft 144b, the drive unit 155, the injector 168, the gas spring mechanism 160, and the communication passage 144e.

Therefore, the exhaust gas easily flows around the valve body 144a and is easily discharged from the exhaust port 142, and thus it is possible to limit an increase in the internal temperature of the combustion chamber 140 due to residual high-temperature exhaust gas. As a result, it is possible to expand the operating range in which the engine output can be increased while limiting pre-ignition.

Further, in the present embodiment, since the facing surface 144c of the valve body 144a faces the piston 114 in the stroke direction, there is a likelihood that the exhaust gas will more readily remain in the vicinity of the facing surface 144c than a case where the valve body 144a is disposed facing in the other direction. Therefore, the discharge performance of the exhaust gas is greatly improved by providing the injector 168.

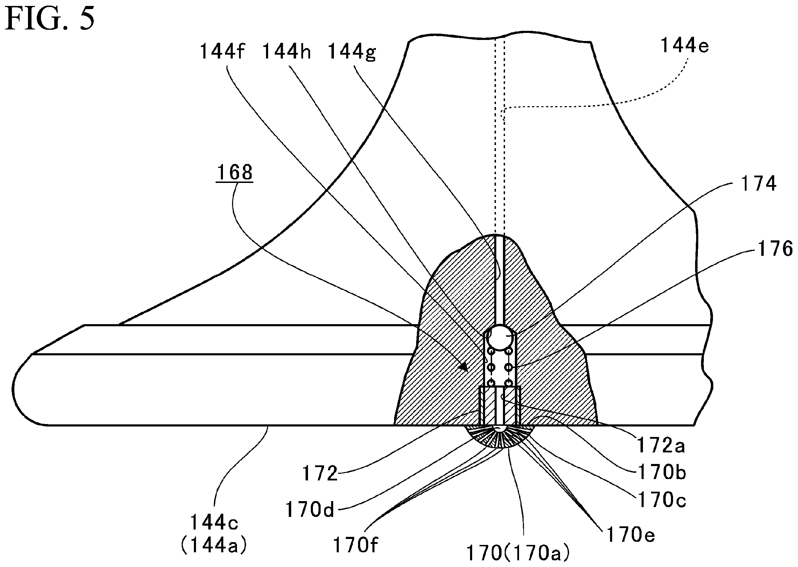

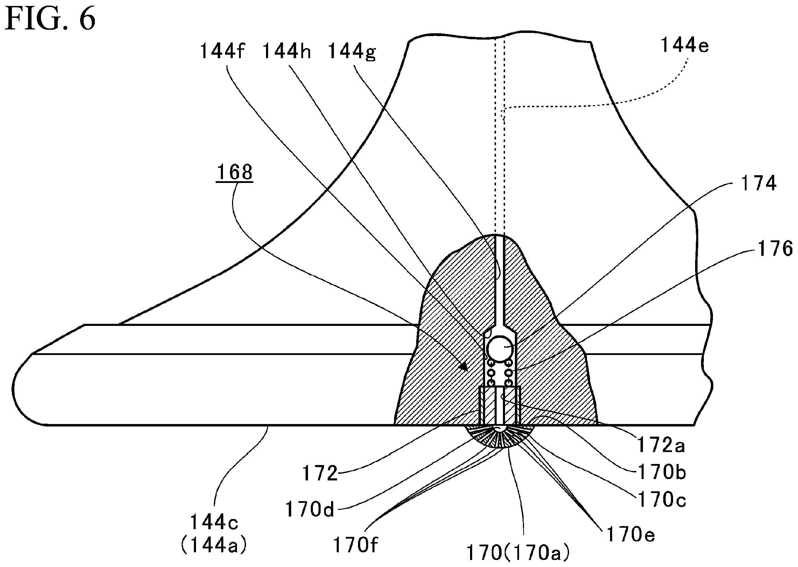

FIGS. 5 and 6 are enlarged extraction views in the vicinity of the injector 168 of FIG. 4. As shown in FIG. 5, the injector 168 includes a nozzle unit 170 and a plug unit 172. A main body 170a of the nozzle unit 170 is formed in a substantially hemispherical shape, and a flat surface portion 170b of the main body 170a contacts the facing surface 144c, and a curved surface portion 170c (a spherical surface portion) of the main body 170a is positioned on the far side from the facing surface 144c. That is, the curved surface portion 170c and the facing surface 144c both face the combustion chamber 140.

Further, in the nozzle unit 170, a substantially hemispherical hollow portion 170d recessed toward the curved surface portion 170c is formed at the center of the flat surface portion 170b, and a plurality of radiation holes 170e penetrating from the hollow portion 170d to the curved surface portion 170c are provided radially.

Further, a check valve 174 is provided inside one end side (a portion communicating with the injector 168) of the communication passage 144e. The check valve 174 allows only the flow of air (incombustible gas) from the gas chamber 160b-side (the upper side in the drawing) to the injector 168-side (the lower side in the drawing). That is, the check valve 174 allows the flow of air from the gas chamber 160b to the injector 168, and prevents the flow of air from the injector 168 to the gas chamber 160b. The check valve 174 of the present embodiment includes a spherical valve body but may be a check valve having another configuration.

Specifically, a large inner diameter portion 144f opening at the facing surface 144c is provided at one end (a portion communicating with the injector 168) of the communication passage 144e of the valve body 144a, and a small inner diameter portion 144g having a smaller inner diameter than that of the large inner diameter portion 144f is provided on the other end side of the communication passage 144e (the upper side in the drawing) with respect to the large inner diameter portion 144f. A tapered surface 144h is formed at a connection portion between the large inner diameter portion 144f and the small inner diameter portion 144g, and the inner diameter of the tapered surface 144h gradually decreases from the large inner diameter portion 144f toward the small inner diameter portion 144g. Further, the check valve 174 is accommodated inside the large inner diameter portion 144f. The tapered surface 144h functions as a valve seat of the check valve 174.

Further, a screw groove is formed on a portion of the inner circumferential surface of the large inner diameter portion 144f close to the facing surface 144c, and the plug unit 172 is inserted from the facing surface 144c-side and is engaged therewith. The plug unit 172 is an annular member (a cylindrical member) having a plug hole 172a penetrating in the stroke direction, and one end (a lower end) thereof is fixed to the flat surface portion 170b of the injector 168. Further, the hollow portion 170d and the radiation holes 170e of the injector 168 communicate with the communication passage 144e through the plug hole 172a of the plug unit 172.

Further, a coil spring 176 contacts the other end (the upper end) of the plug unit 172. The coil spring 176 is accommodated in the large inner diameter portion 144f, is held between the check valve 174 and the plug unit 172 in a compressed state, and pushes the check valve 174 toward the tapered surface 144h.

For example, when the exhaust valve 144 is closed, as shown in FIG. 5, the check valve 174 is pressed against the tapered surface 144h by the pushing force of the coil spring 176, and the communication passage 144e is closed. That is, the pushing force of the coil spring 176 to the check valve 174 is higher than a force for separating the check valve 174 from the tapered surface 144h due to the pressure of air supplied from the compressor (not shown) to the gas chamber 160b through the orifice 164.

Further, when the shaft 144b connected to the gas spring receiver 160a moves and the exhaust valve 144 is opened, the volume of the gas chamber 160b is reduced by the movement of the gas spring receiver 160a, the air in the gas chamber 160b is compressed, and the pressure of the air in the small inner diameter portion 144g of the communication passage 144e increases. When the load acting on the check valve 174 due to the pressure of air becomes greater than the pushing force of the coil spring 176, as shown in FIG. 6, the check valve 174 is pushed by the air in the small inner diameter portion 144g and is separated from the tapered surface 144h. As a result, the air in the gas chamber 160b is injected from the radiation holes 170e of the injector 168 into the combustion chamber 140 through the communication passage 144e.

That is, each of the openings on the curved surface portion 170c-side of the radiation holes 170e is an injection port 170f for injecting air. The communication passage 144e guides the compressed air from the gas chamber 160b to the plurality of injection ports 170f when the volume of the gas chamber 160b decreases.

Since the directions of the central axes of the openings of the injection ports 170f (the central axes of the radiation holes 170e) are different from each other, the injection ports 170f inject air in directions different from each other. That is, the injection directions of air (incombustible fluid) of the injection ports 170f are different from each other. Therefore, the injector 168 can efficiently diffuse the exhaust gas stagnating in the vicinity of the facing surface 144c, and the exhaust gas can easily flow around the valve body 144a and can be more easily discharged from the exhaust port 142.

Further, the air supplied to the gas chamber 160b and functioning as an air spring for closing the exhaust valve 144 can be injected from the injection ports 170f into the combustion chamber 140, and it is not necessary to separately supply air to be injected from the injection ports 170f. As a result, the cost reduction can be obtained with a simple configuration.

Further, since the check valve 174 is provided inside the communication passage 144e, when the exhaust valve 144 opens and the pressure of the gas chamber 160b increases, the check valve 174 is automatically opened. Therefore, it is not necessary to provide an electrical mechanism for controlling the injection of air from the injection ports 170f, and it is possible to obtain further reduction in costs with a simple configuration.

Although the embodiment of the present disclosure has been described above with reference to the attached drawings, the present disclosure is not limited to the above-described embodiment. The shapes, combinations, and the like of the constituent members described in the above embodiment are merely examples, and addition, omission, substitution, and other modifications of the configuration can be adopted.

For example, although the case in which the injector 168 injects air has been described in the embodiment described above, the injector 168 may inject incombustible fluid (which does not burn like fuel), and may inject, for example, water. When water is injected as the incombustible fluid, it is possible to further limit the rise in the internal temperature of the combustion chamber 140. Moreover, a fluid which is an incombustible liquid before injected from the injector 168 and is vaporized to be incombustible gas when injected into the combustion chamber 140 may be used.

Further, in the embodiment described above, the case has been described in which the injector 168 includes the nozzle unit 170, and a plurality of injection ports 170f having different injection directions of air are formed in the nozzle unit 170. However, for example, only one injection port 170f may be formed in the injector 168 (the nozzle unit 170), or part of the facing surface 144c may be used as the injector 168 without providing the nozzle unit 170 or the plug unit 172, and the injection port 170f may be formed on the facing surface 144c.

In the embodiment described above, although the case in which the injector 168 uses the gas spring mechanism 160 that causes the air in the gas chamber 160b to function as an air spring has been described, a coil spring may be used instead of the gas spring mechanism 160. For example, other incombustible gas may be used instead of air.

Further, in the embodiment described above, the case in which the check valve 174 is provided in the communication passage 144e has been described. However, for example, the check valve 174 may not be provided, and may be replaced by, for example, an electronic control valve or the like.

In the embodiment described above, the case in which the fuel injection hole 138 is provided outside the scavenging ports 118 and the fuel gas flows into the cylinder 110 from the scavenging ports 118 has been described. However, a fuel injection port for causing the fuel gas to flow in may be provided in a portion of the cylinder 110 closer to the exhaust port 142 than the scavenging ports 118.

Further, in the embodiment described above, the facing surface 144c of the valve body 144a faces the piston 114 in the stroke direction, but the facing surface 144c may face the piston 114 in a direction different from the stroke direction. For example, the facing surface 144c may be slightly inclined with respect to the direction orthogonal to the stroke direction.

Further, in the embodiment described above, although the injector 168 includes the plurality of injection ports 170f having different injection directions of the incombustible fluid, a configuration in which the injector includes a plurality of injection ports that are disposed at intervals in a direction parallel to the facing surface 144c and inject incombustible fluid in an equal direction (for example, the direction toward the piston 114 in the stroke direction) may be provided. Further, in the embodiment described above, although a branch flow passage is formed in the injector 168 by the hollow portion 170d and the radiation holes 170e, a configuration in which the communication passages 144e are branched and disposed, for example, inside the valve body 144a, and separately communicate with a plurality of injection ports may be provided, for example.

Further, in the embodiment described above, although the cylinder cover 112-side is referred to as the upper side and the scavenging chamber 122-side is referred to as the lower side in the central axis direction of the cylinder 110, it does not limit the posture of the uniflow scavenging type two-cycle engine 100 at the time of actual use, and the engine may be used in any posture as long as an appropriate operation can be secured.

### Industrial Applicability

The present disclosure can be applied to a uniflow scavenging type two-cycle engine in which an exhaust valve opens and closes an exhaust port.

### Description of Reference Signs

100 Uniflow scavenging type two-cycle engine
110 Cylinder
114 Piston
118 Scavenging port
142 Exhaust port
144 Exhaust valve
144a Valve body
144b Shaft
144c Facing surface
144e Communication passage
152 Hydraulic drive piston
154 Hydraulic chamber
155 Drive unit
160 Gas spring mechanism
160a Gas spring receiver
160b Gas chamber
168 Injector
170f Injection port
174 Check valve

## Claims

1. A uniflow scavenging type two-cycle engine (100) in which exhaust gas in a cylinder (110) is pushed out of an exhaust port (142) by scavenging air flowed in from a scavenging port (118), the uniflow scavenging type two-cycle engine comprising:
a valve body (144a) which openably closes the exhaust port (142);
an injector (168) which is provided on a facing surface (144c) of the valve body (144a) facing a piston (114) disposed inside the cylinder (110), and injects air;
a shaft (144b) fixed to a side of the valve body (144a) far from the facing surface (144c);
a drive unit (155) which applies a load to the shaft (144b) to move the valve body (144a) to an open position at which the valve body (144a) opens the exhaust port (142);
a gas spring mechanism (160) including a gas chamber (160b) in which air is stored, in which at least part of the shaft (144b) is positioned, and a volume of which is reduced when the valve body (144a) moves to the open position; and
a communication passage (144e) which is formed in the valve body (144a) and the shaft (144b) and allows the gas chamber (160b) and the injector (168) to communicate with each other, wherein
the communication passage (144e) is provided with a check valve (174) which allows a flow of air from the gas chamber (160b) to the injector (168) and restricts a flow of air from the injector (168) to the gas chamber (160b),
the communication passage (144e) is provided with a large inner diameter portion (144f) opening at the facing surface (144c), and a small inner diameter portion (144g) having a smaller inner diameter than that of the large inner diameter portion (144f),
a tapered surface (144h) is formed at a connection portion between the large inner diameter portion (144f) and the small inner diameter portion (144g), the inner diameter of the tapered surface (144h) gradually decreases from the large inner diameter portion (144f) toward the small inner diameter portion (144g), and the tapered surface (144h) functions as a valve seat of the check valve (174),
the injector (168) includes a nozzle unit (170) and a plug unit (172),
a main body (170a) of the nozzle unit (170) is formed in a hemispherical shape, a flat surface portion (170b) of the main body (170a) contacts the facing surface (144c), and a curved surface portion (170c) of the main body (170a) faces the piston (114),
in the nozzle unit (170), a hollow portion (170d) recessed toward the curved surface portion (170c) is formed at the flat surface portion (170b), and a plurality of radiation holes (170e) penetrating from the hollow portion (170d) to the curved surface portion (170c) are radially provided,
the plug unit (172) is a cylindrical member having a plug hole (172a) penetrating in a stroke direction of the piston (114) and is engaged with the large inner diameter portion (144f), one end of the plug unit (172) is fixed to the flat surface portion (170b) of the nozzle unit (170), and the hollow portion (170d) and the radiation holes (170e) of the injector (168) communicate with the communication passage (144e) through the plug hole (172a) of the plug unit (172), and
a coil spring (176) that pushes the check valve (174) toward the tapered surface (144h) is accommodated in the large inner diameter portion (144f) and contacts the other end of the plug unit (172).

2. The uniflow scavenging type two-cycle engine (100) according to claim 1, wherein the facing surface (144c) of the valve body (144a) faces the piston (114) in the stroke direction of the piston (114).

## Patentansprüche

1. Zwei-Takt-Verbrennungsmotor (100) der Gleichstromspülungsart, bei dem in einem Zylinder (110) befindliches Abgas aus einem Auslassanschluss (142) durch Spülluft herausgedrückt wird, die von einem Spülanschluss (118) einströmt, wobei der Zwei-Takt-Verbrennungsmotor der Gleichstromspülungsart Folgendes aufweist:
einen Ventilkörper (144a), der öffnungsfähig den Auslassanschluss (142) schließt;
einen Injektor (168), der an einer zugewandten Fläche (144c) des Ventilkörpers (144a) vorgesehen ist, die einem Kolben (114) zugewandt ist, der im Inneren des Zylinders (110) angeordnet ist, und der Luft injiziert;
eine Welle (144b), die an einer Seite des Ventilkörpers (144a) fixiert ist, die von der zugewandten Fläche (144a) entfernt ist;
eine Antriebseinheit (155), die eine Last auf die Welle (144b) aufbringt, um den Ventilkörper (144a) zu einer offenen Position zu bewegen, an der der Ventilkörper (144a) den Auslassanschluss (142) öffnet;
einen Gasfedermechanismus (160) mit einer Gaskammer (160b), in der Luft gespeichert ist, in der zumindest ein Teil der Welle (144b) positioniert ist, und von der ein Volumen reduziert wird, wenn der Ventilkörper (144a) sich zu der offenen Position bewegt; und
einen Kommunikationskanal (144e), der in dem Ventilkörper (144a) und der Welle (144b) ausgebildet ist und ermöglicht, dass die Gaskammer (160b) und der Injektor (168) miteinander in Kommunikation stehen, wobei
der Kommunikationskanal (144e) mit einem Rückschlagventil (174) versehen ist, das eine Strömung von Luft von der Gaskammer (160b) zu dem Injektor (168) gestattet und eine Strömung von Luft von dem Injektor (168) zu der Gaskammer (160b) begrenzt,
der Kommunikationskanal (144e) mit einem Abschnitt (144f) mit großem Innendurchmesser, der an der zugewandten Fläche (144c) offen ist, und einem Abschnitt (144g) mit kleinem Innendurchmesser versehen ist, der einen kleineren Innendurchmesser als der Abschnitt (144f) mit großem Innendurchmesser hat,
eine abgeschrägte Fläche (144h) an einem Verbindungsabschnitt zwischen dem Abschnitt (144f) mit großem Innendurchmesser und dem Abschnitt (144g) mit kleinem Innendurchmesser ausgebildet ist, wobei der Innendurchmesser der abgeschrägten Fläche (144h) von dem Abschnitt (144f) mit großem Innendurchmesser zu dem Abschnitt (144g) mit kleinem Innendurchmesser allmählich abnimmt, und die abgeschrägte Fläche (144h) als ein Ventilsitz des Rückschlagventils (174) fungiert,
der Injektor (168) eine Düseneinheit (170) und eine Pfropfeneinheit (172) aufweist,
ein Hauptkörper (170a) der Düseneinheit (170) in einer halbkugelartigen Form ausgebildet ist, ein flacher Flächenabschnitt (170b) des Hauptkörpers (170a) mit der zugewandten Fläche (144c) in Kontakt steht, und ein gekrümmter Flächenabschnitt (170c) des Hauptkörpers (170a) dem Kolben (114) zugewandt ist,
in der Düseneinheit (170) ein hohler Abschnitt (170d), der zu dem gekrümmten Flächenabschnitt (170c) vertieft ist, an dem flachen Flächenabschnitt (170b) ausgebildet ist, und eine Vielzahl an Abstrahlungslöchern (170e), die von dem hohlen Abschnitt (170d) zu dem gekrümmten Flächenabschnitt (170c) hindurchdringen, radial vorgesehen ist,
die Pfropfeneinheit (172) ein zylindrisches Element ist, das ein Pfropfenloch (172a) hat, das in einer Hubrichtung des Kolbens (114) hindurchdringt, und mit dem Abschnitt (144f) mit großem Innendurchmesser in Eingriff steht, wobei ein Ende der Pfropfeneinheit (172) an dem flachen Flächenabschnitt (170b) der Düseneinheit (170) fixiert ist, und der hohle Abschnitt (170d) und die Abstrahlungslöcher (170e) des Injektors (168) mit dem Kommunikationskanal (144e) durch das Pfropfenloch (172a) der Pfropfeneinheit (172) in Kommunikation stehen, und
eine Schraubenfeder (176), die das Rückschlagventil (174) zu der abgeschrägten Fläche (144h) drückt, in dem Abschnitt (144f) mit großem Innendurchmesser untergebracht ist und mit dem anderen Ende der Pfropfeneinheit (172) in Kontakt steht.

2. Zwei-Takt-Verbrennungsmotor (100) der Gleichstromspülungsart gemäß Anspruch 1, wobei die zugewandte Fläche (144c) des Ventilkörpers (144a) dem Kolben (114) in der Hubrichtung des Kolbens (114) zugewandt ist.

## Revendications

1. Moteur à deux temps à balayage à sens unique (100), dans lequel un gaz d'échappement dans un cylindre (110) est poussé hors d'un orifice d'échappement (142) par de l'air de balayage étant entré à partir d'un orifice de balayage (118), le moteur à deux temps à balayage à sens unique comprenant :
un corps de soupape (144a) qui ferme l'orifice d'échappement (142) de façon ouvrable ;
un injecteur (168) qui est prévu sur une surface en regard (144c) du corps de soupape (144a) en regard d'un piston (114) disposé à l'intérieur du cylindre (110), et injecte de l'air ;
un arbre (144b) fixé à un côté du corps de soupape (144a) éloigné de la surface en regard (144c) ;
une unité d'entraînement (155) qui applique une charge sur l'arbre (144b) pour déplacer le corps de soupape (144a) vers une position ouverte à laquelle le corps de soupape (144a) ouvre l'orifice d'échappement (142) ;
un mécanisme de ressort à gaz (160) incluant une chambre à gaz (160b) dans laquelle de l'air est stocké, dans laquelle au moins une partie de l'arbre (144b) est positionnée, et dont un volume est réduit lorsque le corps de soupape (144a) se déplace vers la position ouverte ; et
un passage de communication (144e) qui est formé dans le corps de soupape (144a) et l'arbre (144b) et permet à la chambre à gaz (160b) et à l'injecteur (168) de communiquer l'un avec l'autre, dans lequel
le passage de communication (144e) est pourvu d'une soupape de non-retour (174) qui permet un écoulement d'air depuis la chambre à gaz (160b) jusqu'à l'injecteur (168) et empêcher un écoulement d'air depuis l'injecteur (168) jusqu'à la chambre à gaz (160b),
le passage de communication (144e) est pourvu d'une portion de grand diamètre intérieur (144f) s'ouvrant à la surface en regard (144c), et d'une portion de petit diamètre intérieur (144g) ayant un diamètre intérieur plus petit que celui de la portion de grand diamètre intérieur (144f),
une surface tronconique (144h) est formée à une portion de raccordement entre la portion de grand diamètre intérieur (144f) et la portion de petit diamètre intérieur (144g), le diamètre intérieur de la surface tronconique (144h) diminuant progressivement depuis la portion de grand diamètre intérieur (144f) vers la portion de petit diamètre intérieur (144g), et la surface tronconique (144h) sert de siège de soupape de la soupape de non-retour (174),
l'injecteur (168) inclut une unité buse (170) et une unité bougie (172),
un corps principal (170a) de l'unité buse (170) est de forme hémisphérique, une portion de surface plate (170b) du corps principal (170a) entre en contact avec la surface en regard (144c), et une portion de surface courbe (170c) du corps principal (170a) est en regard du piston (114),
dans l'unité buse (170), une portion creuse (170d) évidée vers la portion de surface courbe (170c) est formée au niveau de la portion de surface plate (170b), et une pluralité de trous en rayonnement (170e) pénétrant depuis la portion creuse (170d) jusqu'à la portion de surface courbe (170c) sont prévus radialement,
l'unité bougie (172) est un élément cylindrique ayant un trou de bougie (172a) pénétrant dans un sens de course du piston (114) et est en prise avec la portion de grand diamètre intérieur (144f), une extrémité de l'unité bougie (172) est fixée à la portion de surface plate (170b) de l'unité buse (170), et la portion creuse (170d) et les trous en rayonnement (170e) de l'injecteur (168) communiquent avec le passage de communication (144e) par l'intermédiaire du trou de bougie (172a) de l'unité bougie (172), et
un ressort hélicoïdal (176) qui pousse la soupape de non-retour (174) vers la surface tronconique (144h) est logé dans la portion de grand diamètre intérieur (144f) et entre en contact avec l'autre extrémité de l'unité bougie (172).

2. Moteur à deux temps à balayage à sens unique (100) selon la revendication 1, dans lequel la surface en regard (144c) du corps de soupape (144a) est en regard du piston (114) dans le sens de course du piston (114).
